(19) Europäisches Patentamt

European Patent Office

Office européen des brevets

(11) **EP 0 720 165 B1**

(12) **EUROPEAN PATENT SPECIFICATION**

(45) Date of publication and mention
of the grant of the patent:
**14.04.2004 Bulletin 2004/16**

(51) Int Cl.⁷: **G11B 15/473**, G05D 13/62

(21) Application number: **96101855.3**

(22) Date of filing: **29.11.1991**

(54) **A drum servo system**

Trommelservosystem

Servo-système pour tambour

(84) Designated Contracting States:
**DE FR GB**

(30) Priority: **30.11.1990 JP 33612690**
**29.03.1991 JP 12196691**

(43) Date of publication of application:
**03.07.1996 Bulletin 1996/27**

(62) Document number(s) of the earlier application(s) in
accordance with Art. 76 EPC:
**91120619.1 / 0 489 375**

(73) Proprietor: **VICTOR COMPANY OF JAPAN,
LIMITED**
**Kanagawa-ku Yokohama (JP)**

(72) Inventors:
• **Ogasawara, Jin**
 **Yokohama (JP)**
• **Higurashi, Seiji**
 **Tokyo (JP)**
• **Shindo, Tomoyuki**
 **Midori-ku, Yokohama (JP)**
• **Suwa, Tetsuya**
 **Yokohama (JP)**

(74) Representative:
**Leson, Thomas Johannes Alois, Dipl.-Ing. et al
TBK-Patent,
P.O. Box 20 19 18
80019 München (DE)**

(56) References cited:
**EP-A- 0 129 224         EP-A- 0 327 289**
**EP-A- 0 430 043         GB-A- 2 217 509**
**US-A- 4 296 446         US-A- 4 617 599**
**US-A- 4 630 142         US-A- 4 807 055**
**US-A- 4 872 073**

• **PATENT ABSTRACTS OF JAPAN vol. 010, no.
019 (P-423), 24 January 1986 (1986-01-24) & JP
60 171663 A (MITSUBISHI DENKI KK), 5
September 1985 (1985-09-05)**
• **PATENT ABSTRACTS OF JAPAN vol. 010, no.
019 (P-423), 24 January 1986 (1986-01-24) & JP
60 171604 A (MITSUBISHI DENKI KK), 5
September 1985 (1985-09-05)**

Note: Within nine months from the publication of the mention of the grant of the European patent, any person may give
notice to the European Patent Office of opposition to the European patent granted. Notice of opposition shall be filed in
a written reasoned statement. It shall not be deemed to have been filed until the opposition fee has been paid. (Art.
99(1) European Patent Convention).

## Description

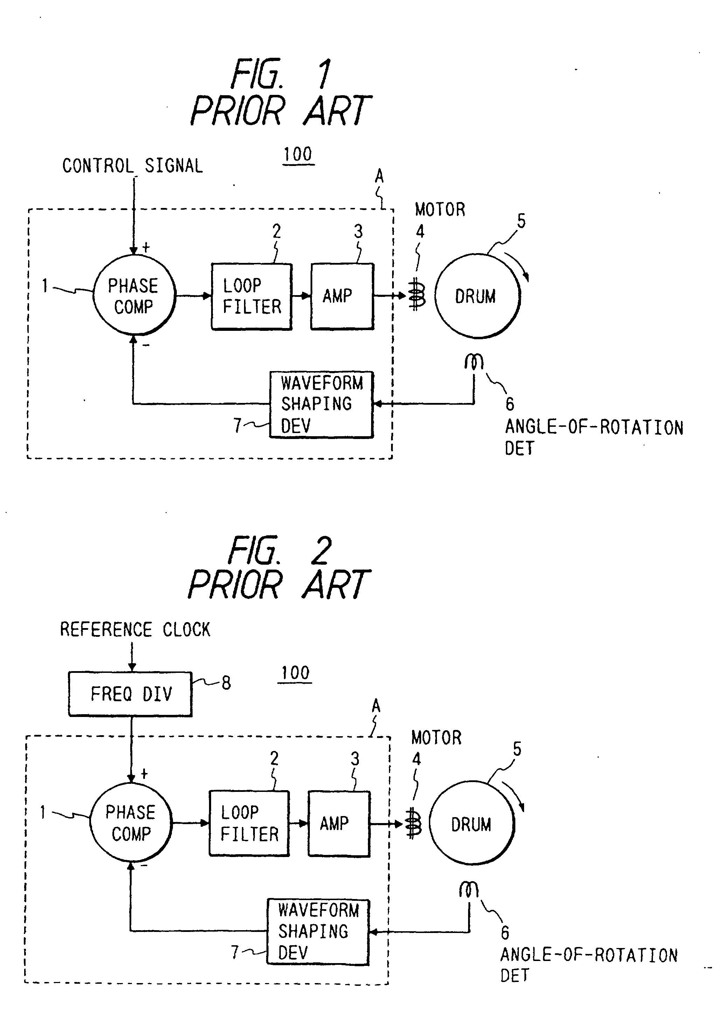

FIGS. 1 to 3 are schematic block diagrams each for illustrating a conventional drum servo system 100.

As shown in FIG. 1, for example, a control signal whose frequency is an integral submultiple of a frequency of a vertical synchronization signal separated from a composite video signal in a synchronized manner is supplied to a noninverting input terminal of a phase comparator 1 which is a composing element of a drum servo circuit (to be described later), namely, a phase control means A. Further, an angle-of-rotation information signal to be described later, which has a shaped waveform, is fed to an inverting terminal of the phase comparator 1. Moreover, the phase comparator 1 compares the phase of the angle-of-rotation signal with that of the control signal and then outputs a phase comparison signal representing the result of the comparison to a loop filter 2. Thereafter, the loop filter 2 outputs an output signal obtained from the phase comparison signal supplied thereto by removing high-frequency components thereof to an amplifier 3. Subsequently, the signal amplified by the amplifier 3 is fed to a motor 4. Thereby, a rotary head drum 5 having a well-known structure rotates in response to the signal, of which the frequency is equal to a predetermined value and the phase is controlled. An angle-of-rotation detector 6 generates an angle-of-rotation information signal according to an angle of rotation of the drum 5 and then outputs the angle-of-rotation signal to a waveform shaping device 7. Subsequently, the device 7 shapes the waveform of the angle-of-rotation signal and outputs the angle-of-rotation signal, of which the waveform is thus shaped, to the inverting input terminal of the phase comparator 1. Incidentally, the drum servo circuit is a portion composed of the phase comparator 1, the loop filter 2, the amplifier 3 and the waveform shaping device 7.

Thus the rotation of the drum 5 is always controlled by the phase control means A, to which the control signal is supplied.

Further, the configuration of FIG. 2 is obtained by connecting an output of a frequency demultiplier or divider 8 to the noninverting input terminal of the phase comparator 1. Incidentally, the same reference numerals designate the same parts of FIG. 1 which will not be described again hereinbelow.

As shown in FIG.2, a reference clock signal having a frequency higher than the frequency of the control signal is applied to the frequency demultiplier 8. Thereafter, a frequency de-multiplication signal having a frequency equal to the frequency of the control signal is outputted ,from the frequency demultiplier 8 to the noninverting input terminal of the phase comparator 1 of the drum servo circuit (namely, the phase control means) A, an operation of which is described above. Incidentally, in the instant application, a frequency de-multiplication is defined as an operation of obtaining a signal whose frequency is an integral submultiple of a frequency of another signal. Therefore, the operation of the phase control means A is not explained herein again.

Thus the rotation of the drum 5 is controlled by the phase control means A, to which a frequency demultiplication signal having a frequency equal to that of the control signal is supplied.

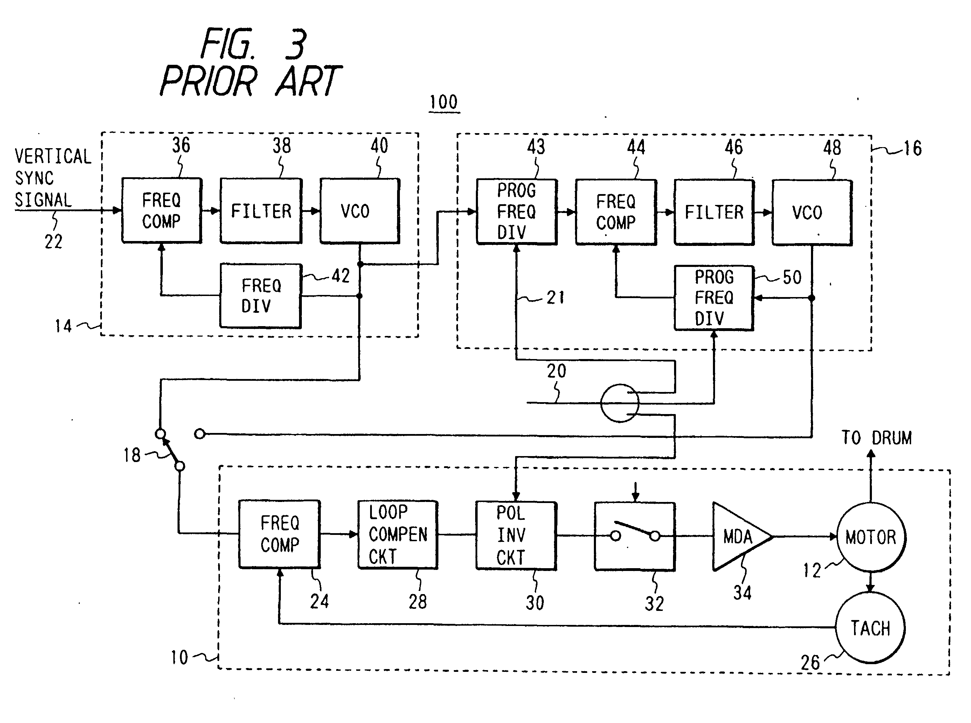

Further, in case of the configuration of FIG. 3, one of signals respectively having different frequencies is selected. Namely, a speed control signal is supplied from a reference loop 14 to a motor control loop 10 in case of employing a normal reproducing speed. In contrast, the speed control signal is fed from a speed synthesizer 16 to the motor control loop 10 in case of employing a reproducing speed other than the normal reproducing speed. This selection is performed by operating a switch 18.

The reference loop 14 is composed of a frequency comparator 36 to which a vertical synchronization signal 22 is supplied, a filter 38, a voltage-controlled oscillator (VCO) 40 and a frequency demultiplier 42. On the other hand, the speed synthesizer 16 is comprised of a programmed frequency demultiplier 43, a frequency comparator 44, a filter 46, a VC0 48 and another programmed frequency demultiplier 50. The switch 18 is used to select one of an oscillation signal outputted from the VCO 40 of the reference loop 14 and another oscillation signal outputted from the VCO 48 of the speed synthesizer 16 as a speed control signal. Further, the motor control loop 10 consists of a frequency comparator 24, a loop compensating circuit 28, a polarity inverting circuit 30, a switch 32, a motor driving amplifier (MDA) 34, a motor 12 and a tachometer 26.

The above described conventional drum servo systems, however, have the following drawbacks.

First, when changing the control signal supplied to the drum servo circuit (namely, the phase control means) A, the drum servo circuit of each of the conventional drum servo systems responds to the change as if it received an abrupt disturbance from the outside. Namely, the drum servo circuit of each of the conventional servo systems gets into what is called "a floating state". Especially, when the control signal is generated by changing a frequency de-multiplying rate used to perform a frequency de-multiplication of a reference clock having a frequency larger than the frequency of the control signal in order to change the frequency of the control signal and is fed to the drum servo .circuit of each of the conventional drum servo systems, a phase error occurring in the drum servo circuit of each of the conventional drum servo systems immediately reflects this. Consequently, the drum servo circuit of each of the conventional drum servo systems responds to the change in frequency de-multiplication ratio in a manner similar to the manner of a response in case where it suffers an abrupt disturbance originated from the outside. Moreover, in case where a low-frequency (e.g., 30 Hz or 25 Hz) employed in a VTR is used as the frequency of the control signal, a phase error occurring in the drum servo circuit of each conventional drum servo system as the result of the change in reference phase of the reference clock signal becomes large and thus the stability of the drum servo circuit of each drum servo system is decreased.

Second, in case of the conventional drum servo system of FIG. 3, when a speed control signal supplied from the speed synthesizer 16 is selected and normal reproduction is performed by releasing the switch 18 from the left position of FIG. 3 and placing the switch 18 in the right position of FIG. 3, a control signal fed to the motor control loop 10 is liable to include noises if the response characteristic of the control loop 10 is set such that the control loop 10 makes a quick response. As a consequence, the precision of.frequency control becomes low. Conversely, if the precision of the frequency control is set to be high, the response of the control loop 10 becomes slow.

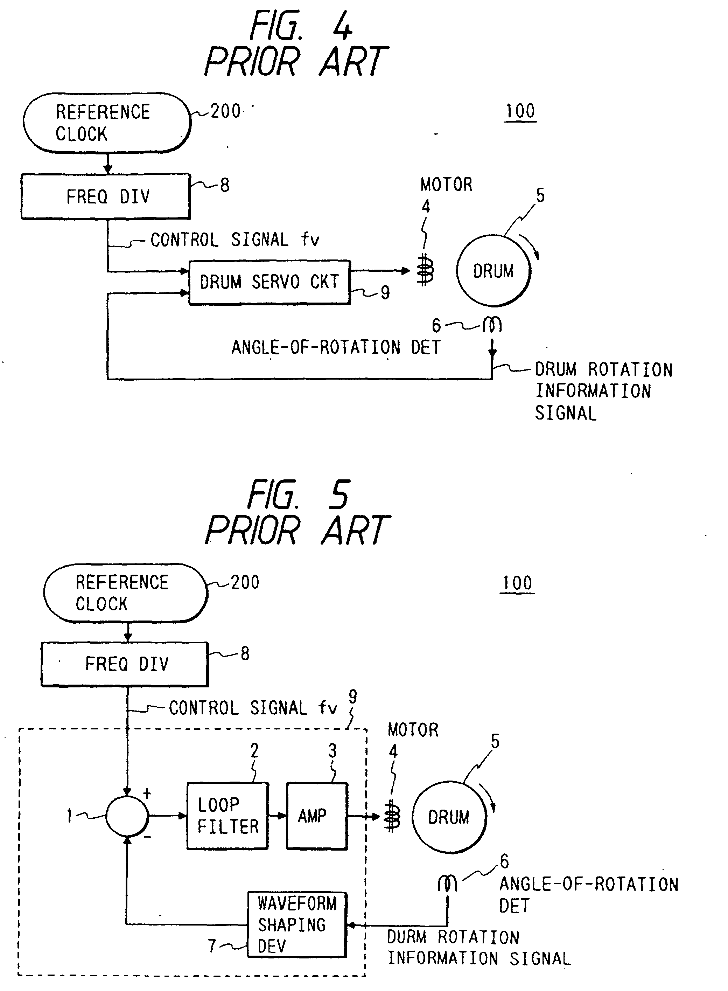

Next, another drawback of the conventional drum servo system will be described hereinafter by referring to FIGS. 4 and 5. Reference numeral 100 denotes the conventional drum servo system; 200 a reference clock generator; 8 a frequency demultiplier of which the de-multiplication ratio is 1/M; 9 a drum servo circuit; 1 a phase comparator; 2 a loop filter; 3 an amplifier; 7 a waveform shaping device; 4 a motor; 5 a drum ; and 6 an angle-of-rotation detector.

As shown in FIG. 4, the conventional drum servo system 100 for controlling the rotation speed and the rotation phase of a video head (not shown) generates a control signal having no frequency deviation on the basis of a reference clock signal sent from the reference clock generator 200. Thus.a drum servo operation is performed.by this control signal.

More particularly, as shown in FIG. 5, a reference clock signal, which has a frequency higher than the frequency of the control signal and is outputted from the reference clock generator 200, is supplied to the frequency demultiplier 8 which decreases the frequency of the reference clock signal to (1/M) times and then outputs to the noninverting input terminal of the phase comparator 1 of the drum servo circuit 9 a de-multiplication signal having the same frequency as the control signal has. A drum rotation information signal, of which the waveform is shaped, is supplied to the inverting input terminal of the phase comparator 1 which compares the phase of the drum rotation information signal with that of the control signal and then outputs a phase comparison signal representing the result of the comparison to the loop filter 2. Thereafter, the loop filter 2 outputs a signal obtained by removing high-frequency components of the supplied phase comparison signal therefrom to the amplifier 3. Subsequently, the signal amplified by the amplifier 3 is fed to the motor 5. Thereby, the rotary head drum 5 having a well-known structure rotates being controlled by the control signal having a predetermined frequency. The angle-of-rotation detector 6 outputs a drum rotation information signal (hereunder sometimes referred to as an angle-of-rotation detection signal) to the waveform shaping device 7.

Thus the rotation of the drum 6 is controlled by the drum servo circuit 9 to which the frequency de-multiplication signal having the same frequency as the control signal has.

This conventional drum servo system has the following drawback.

Namely, in case where a video signal having a frequency deviation of, for instance, + 0.1 % and a sound signal having no frequency deviation are simultaneously recorded by means of a VTR having a well-known servo system, the drum servo system follows a reference signal separated from the video signal and thus the number of rotation of the drum is larger than a normal or regular number of rotation thereof by + 0.1 %. At the time of reproducing a record, the drum servo system follows a control signal, which has no frequency deviation and is generated from a reference clock signal, and thus the normal or regular number of rotation of the drum is maintained. Therefore, a number-of-rotations deviation of the drum is ± 0 %.

Hence, if a frequency deviation occurs in a video signal to be recorded, a lapse of time when magnetic tape touches and travels around the drum in case of reproducing the video signal (hereunder sometimes referred to simply as a reproducing time) is different from another lapse of time when the magnetic tape touches and runs around the drum in case of recording the video signal (hereunder sometimes referred to simply as a recording time) because of the fact that the number of rotations of the drum at the time of recording the video signal is different from that of rotations of the drum at the time of reproducing the recorded video signal. (In this case, the reproducing time is longer than the recording time by 0.1 %.)

Thus this conventional drum servo system has a drawback in that when a video signal having a frequency deviation and a sound signal having no frequency deviation are simultaneously recorded and thereafter the video and sound signals are simultaneously reproduced, a pitch of a sound indicated by the sound signal at the reproduction differs from a pitch of the sound indicated by the sound signal at the time of recording. (In this case, the former pitch becomes lower than the latter pitch.)

US-A-4 617 599 discloses a digital signal recording/reproducing apparatus capable of recording and reproducing digital signals having differences in respect to sampling frequency thereof and the number of quantization bits per sample. The revolution speed of rotating heads for recording and reproduction or traveling speed of a recording medium is varied as a function of different sampling frequencies. A signal-processing circuit for processing the digital signals to be recorded on the recording medium is controlled by a clock signal of which frequency is changed in dependence on the different sampling frequencies. The digital signals which differ in the sampling frequency and the quantization bit numbers can be recorded by same recording and reproducing apparatus with same wavelength and signal format.

US-A-4 630 142 describes an apparatus for reproducing digital signals recorded on a recording tape transported along a rotary drum. The tape is transported over the drum at an absolute tape speed that can be varied. A servomechanism responsive to variations in the absolute tape speed adjusts the transport mechanism so that the head acquires a rotary speed such that the relative speed is restored to and maintained at a substantially constant value.

EP-A-327 289 discloses a magnetic recording and playback apparatus, using a magnetic head disposed on a rotating drum for forming oblique recording tracks in succession on a magnetic tape. A speed control means controls the rotating speed of the rotating drum and/or the traveling speed of the magnetic tape in accordance with the bit transfer rate of serial data to be recorded. A processor means compresses along the time base the serial data so that the serial data is recorded while the magnetic head scans the recording track.

GB-A-2 217 509 describes a digital signal recording apparatus which provides the possibility of inputting plural kinds of digital information signals having different bit rates. Recording is performed for each data block which includes a predetermined amount of data which includes main data corresponding to the digital information. The ratio of the main data within the data block is switched in accordance with each kind of digital information signal.

The present invention is created to eliminate the above described drawbacks of the conventional drum servo systems.

It is, accordingly, an object of the present invention to provide a drum servo system which can stably follow abrupt changes in a control signal and which can make a reproducing time substantially equal to a recording time.

In accordance with an aspect of the present invention, there is provided a control system as defined in claim 1 or any of the dependent claims.

Further, an apparatus is provided which comprises such a control system.

The control system can stably follow an abrupt change occurring in the control signal.

The reproducing time can be made to be equal to the recording time with high precision. Further, even if a video signal having a frequency deviation is recorded and reproduced together with a digital sound data signal having no frequency deviation, the rotation phase (namely, the angle of rotation) of the drum can be controlled on the basis of the digital sound data signal by applying the present invention to a well-known VTR. Thereby, a video signal can be reproduced completely in synchronization with a sound signal. Consequently, extremely high-quality reproduced image and sound can be obtained.

## BRIEF DESCRIPTION OF THE DRAWINGS

Other features, objects and advantages of the present invention will become apparent from the following description of preferred embodiments with reference to the drawings in which like reference characters designate like or corresponding parts throughout several views, and in which:

FIGS. 1 to 3 are schematic block diagrams for illustrating conventional drum servo systems;
FIGS. 4 and 5 are schematic block diagrams for illustrating another conventional drum servo system;
FIGS. 6 to 8 are schematic block diagrams respectively illustrating a first, second and third structure (not claimed):
FIG. 9 is a schematic block diagram for illustrating a first embodiment of the present invention;
FIG. 10 is a schematic block diagram for illustrating a second embodiment of the present invention; and
FIG. 11 is a diagram for illustrating time information recorded on a storage medium.

Hereinafter, preferred embodiments of the present invention will be described in detail by referring to the accompanying drawings.

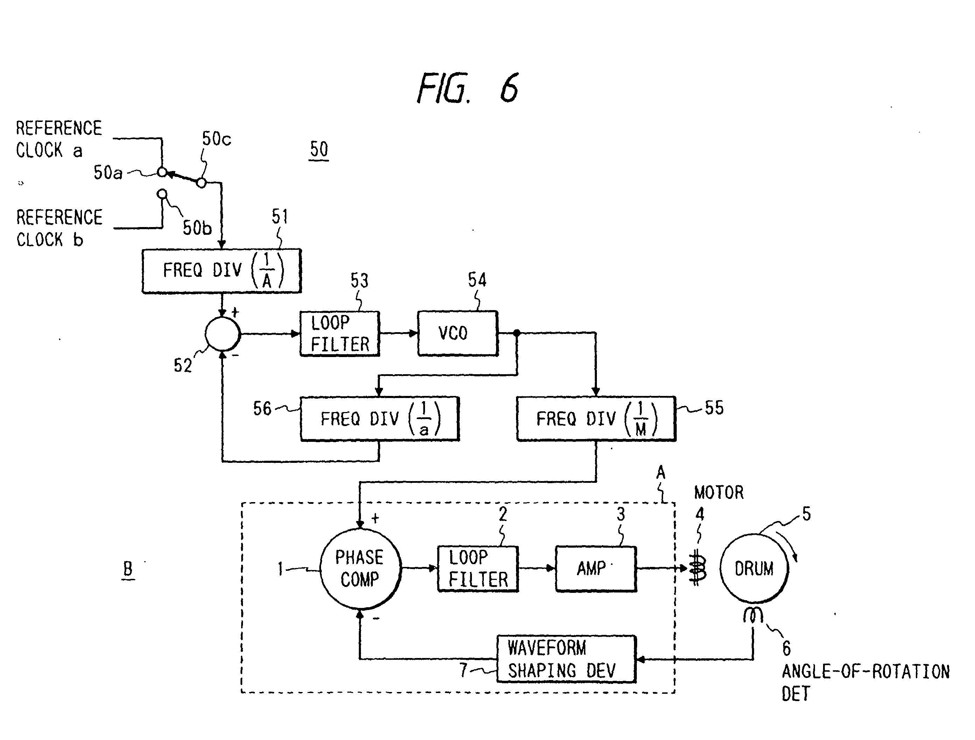

FIGS. 6 to 8 are schematic block diagrams respectively illustrating a first, second and third structure. Incidentally, in these figures, like reference characters designate like or corresponding portions of the conventional drum servo systems of FIGS. 1 to 5. Further, the description of such portions are omitted herein for simplicity of description.

The first structure (namely, a first drum servo system B of FIG. 6) is adapted to change one of reference clocks respectively having different frequencies to another thereof if necessary for controlling a rotating frequency of a drum. As shown in FIG. 6, this drum servo system B is comprised of a phase control means (namely, a rotation control means) A for controlling a rotating phase (thus controlling a rotation) of a drum 5 on the basis of a phase comparison signal obtained by comparing a phase of an angle-of-rotation information signal determined according to an angle of rotation of the drum 5 with a phase of a control signal and a phase locked loop (PLL), namely a comparison control means for outputting the control signal to be supplied to the phase control means A by performing phase comparison control by use of a frequency de-multiplication signal obtained by effecting a frequency de-multiplication of any one of reference clocks (namely, reference signals) $\underline{a}$ and $\underline{b}$ having frequencies higher than the frequency of the control signal. Further, the PLL is composed of a phase comparator 52, a loop filter 53, a VCO 54 and a frequency demultiplier 56. Incidentally, reference numeral 55 designates a frequency demultiplier.

In case of this drum servo system B, to change the frequency of the control signal for controlling the rotation of the drum 5, a stationary contact to be engaged with a movable contact 50c of a selection switch (hereunder referred to simply as a switch) 50 is changed between a stationary one 50a to which a reference clock a is supplied and another stationary one 50b to which another reference clock 50b is supplied.

In case where the switch 50 is in a switching sate as shown in FIG. 6, a frequency de-multiplication signal obtained by changing the frequency of the reference clock a into (1/A) thereof by the frequency demultiplier 51 is fed to the noninverting input terminal of the phase comparator 52. Then the phase comparator 52 outputs to the loop filter 53 a phase comparison signal obtained by comparing the phase of this frequency de-multiplication signal with that of another frequency de-multiplication signal supplied to the inverting input terminal thereof from a frequency demultiplier 56 which will be described later. Thereafter, the loop filter 53 outputs to the VCO 54 a signal obtained by removing a high-frequency component of the phase comparison signal supplied thereto.

An oscillation output signal outputted from the VCO 54 is bifurcated, namely, branched into the frequency demultipliers 55 and 56. The frequency of the oscillation output.signal supplied to the frequency demultiplier 55 is changed to (1/M) thereof. Subsequently, a signal obtained as the result of this frequency de-multiplication is fed to the noninverting input terminal of the phase comparator 1 of the phase control means A. On the other hand, the frequency of the oscillation output signal applied to the frequency demultiplier 56 of the PLL is changed to (1/a) thereof. Subsequently, a signal obtained as the result of this frequency de-multiplication is supplied to the inverting input terminal of the phase comparator 52.

By setting the frequency de-multiplication ratio (1/a) of the frequency demultiplier 56 as larger than that (1/M) of the frequency demultiplier 55, the frequency of the phase comparison signal outputted from the phase comparator 52 can be set as higher than that of the phase comparison signal outputted from the phase comparator 1.

Thus, in case of this drum servo system B, effects of an abrupt change of a state of a drum servo circuit (namely, a phase control means) A owing to a change of a reference clock between the clock a and the clock b, which are equivalent to effects of a radical disturbance from the outside, can be.absorbed in the PLL controlled by the VCO 54. Therefore, it can be averted that a change in reference clock directly causes a phase error of the drum servo circuit. The drum servo circuit can stably follow change. in rotating phase of the drum 5 occurring due to change in reference clock.

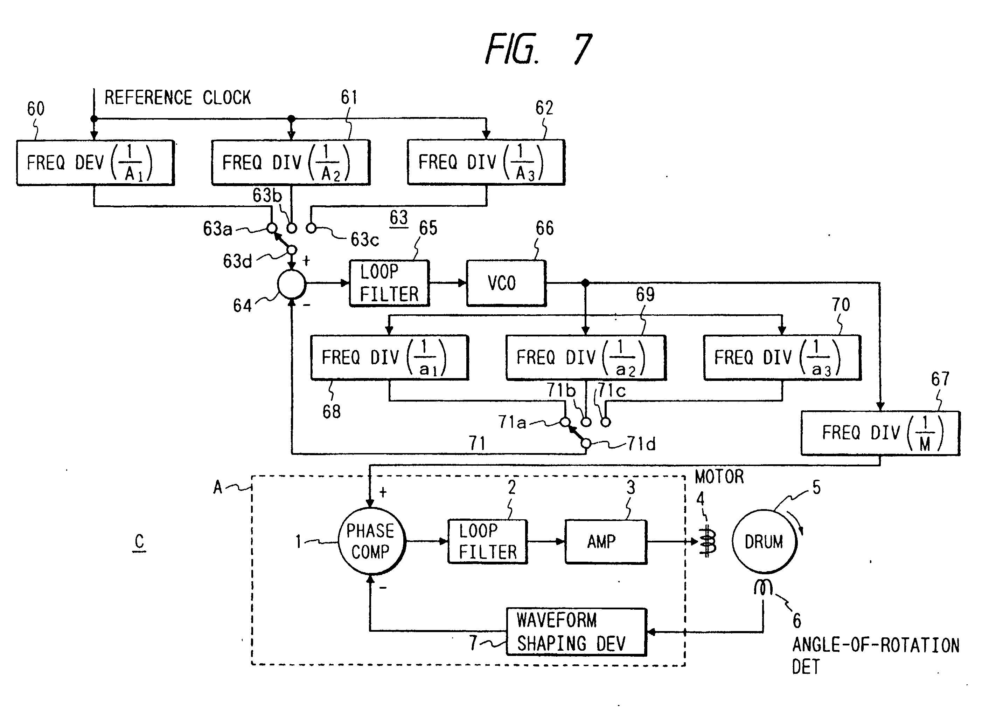

Further, the second structure (namely, a second drum servo system C of FIG. 7) is adapted to change a frequency de-multiplication signal obtained by performing a frequency de-multiplication of a single clock if necessary for changing a rotating frequency of a drum. As illustrated in FIG. 7, the second drum servo system C is composed of a phase control means (namely, a rotation control means) A for controlling a rotating phase (thus controlling a rotation) of a drum 5 on the basis of a phase comparison signal obtained by comparing a phase of an angle-of-rotation information signal determined according to an angle of rotation of the drum 5 with a phase of a control signal and a phase locked loop (PLL), namely a comparison control means for outputting the control signal to be supplied to the phase control means A by performing phase comparison control by selecting and using one of three frequency de-multiplication signals obtained by effecting a frequency de-multiplication of a reference clock (namely, a reference signal) having a frequency higher than the frequency of the control signal. Further, the PLL is composed of a phase comparator 64, a loop filter 65, a VCO 66, frequency demultipliers 68, 69 and 70 and a switch 71. Incidentally, the phase comparator 64, the loop filter-65, the VCO 66 and the frequency demultiplier 67 are the same as the phase comparator 52, the loop filter 53, the VCO 54 and the frequency demultiplier 55 of the first structure of FIG. 6, respectively.

In case of this drum servo system C, to change the frequency of the control signal for controlling the rotation of the drum 5, a stationary contact to be engaged with a movable contact 63d of a selection switch (hereunder referred to simply as a switch) 63 is changed among a stationary one 63a, to which a frequency de-multiplication signal obtained by changing the frequency of a reference clock into $(1/A_1)$ thereof in a frequency demultiplier 60 is supplied, and another stationary one 63b, to which a frequency de-multiplication signal obtained by changing the frequency of the reference clock into $(1/A_2)$ thereof in a frequency demultiplier 61 is supplied, and further another stationary one 63c, to which a frequency de-multiplication signal obtained by changing the frequency of the reference clock into $(1/A_3)$ thereof in a frequency demultiplier 62 is supplied.

In case where the switch 63 is in a switching sate as shown in FIG. 7, a frequency de-multiplication signal obtained by changing the frequency of the reference clock into $(1/A_1)$ thereof by the frequency demultiplier 60 is fed to the noninverting input terminal of the phase comparator 64 of the PLL. Then the phase comparator 64 outputs to the loop filter 65 a phase comparison signal obtained by comparing the phase of this frequency de-multiplication signal with that of another frequency de-multiplication signal supplied to the inverting input terminal thereof and selected by a selection switch (hereunder referred to as a switch) 71 which will be described later. Thereafter, the loop filter 65 outputs to the VCO 66 a signal obtained by removing a high-frequency component of the phase comparison signal supplied thereto.

An oscillation output signal outputted from the VCO 66 is first bifurcated. The frequency of the oscillation output signal supplied to the frequency demultiplier 67 is changed to (1/M) thereof. Subsequently, a signal obtained as the result of this frequency de-multiplication is fed to the noninverting input terminal of the phase comparator 1 of the phase control means A. On the other hand, the other oscillation output signal is further branched into three oscillation output signals (hereunder referred to as branch signals) respectively supplied to the frequency demultipliers 68, 69 and 70. The frequency of the oscillation output signal applied to the frequency demultiplier 68 is changed by $(1/a_1)$ thereof. Subsequently, a signal obtained as the result of this frequency de-multiplication is supplied to the stationary terminal or contact 71a of the switch 71. Similarly, the frequency of the oscillation output signal applied to the frequency demultiplier 69 is changed to $(1/a_2)$ thereof. Subsequently, a signal obtained as the result of this frequency de-multiplication is supplied to the stationary terminal or contact 71b of the switch 71. Further, the frequency of the oscillation output signal applied to the frequency demultiplier 70 is changed into $(1/a_3)$ thereof. Subsequently, a signal obtained as the result of this frequency de-multiplication is supplied to the stationary terminal or contact 71c of the switch 71.

In case of a switching state of the switch 71 of FIG. 7, the frequency of the oscillation output signal supplied to the frequency demultiplier 68 is changed to $(1/a_1)$ thereof. Subsequently, a signal obtained as the result of this frequency de-multiplication is fed to the inverting input terminal of the phase comparator 64.

By setting each of the frequency de-multiplication ratio $(1/a_1)$ of the frequency demultiplier 68, that $(1/a_2)$ of the frequency demultiplier 69 and that $(1/a_3)$ of the frequency demultiplier 70 as larger than that (1/M) of the frequency demultiplier 67, the frequency of the phase comparison signal outputted from the phase comparator 64 can be set as higher than that of the phase comparison signal outputted from the phase comparator 1.

**[0045]** - Thus, in case of this drum servo system C, effects of an abrupt change of a state of a drum servo circuit (namely, the phase control means) A, which are equivalent to effects of a radical disturbance from the outside, can be absorbed in the PLL controlled by the VCO 66 by changing the combination of switching states of the switches 63 and 71. The drum servo circuit can stably follow change in the rotating phase of the drum 5 occurring due to change in reference clock.

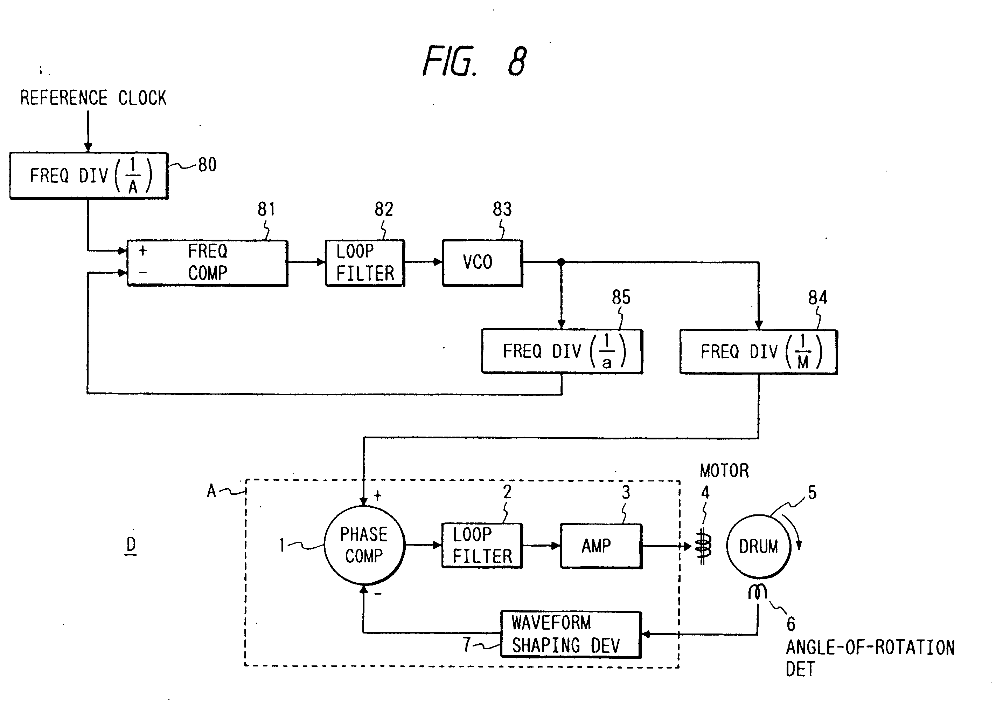

Moreover, the third structure (namely, a third drum servo system D of FIG. 8) is constructed by employing a frequency comparator 81 instead of the phase comparator 52 of the PLL of FIG. 6. As illustrated in FIG. 3, the third drum servo system D is composed of a phase control means (namely, a rotation control means) A for controlling a rotating phase (thus controlling a rotation) of a drum 5 on the basis of a phase comparison signal obtained by comparing a phase of an angle-of-rotation information signal determined according to an angle of rotation of the drum 5 with a phase of a control signal and a PLL, namely a comparison control means for outputting the control signal to be supplied to the phase control means A by performing phase comparison control by selecting and using a frequency de-multiplication signal obtained by effecting a frequency de-multiplication of a reference clock (namely, a reference signal) having a frequency higher than the frequency of the control signal. Further, the PLL is composed of a phase comparator 81, a loop filter 82, a VCO 83 and a frequency demultipliers 85. Incidentally, the frequency demultiplier 80 has the same structure as the frequency demultiplier 51. Similarly, the loop filter 65 is the same as the loop filter 53 or 65. Further, the VCO 83 is the same as the VCO 54 or 66. Moreover, the frequency demultiplier 84 is the same as the frequency demultiplier 55 or 67. Furthermore, the frequency demultiplier 85 is the same as the frequency demultiplier 56.

In case of this drum servo system D, to change the frequency of the control signal for controlling the rotation of the drum 5, the frequency of a frequency comparison signal outputted from the frequency comparator 81 is changed.

As shown in FIG. 8, a frequency de-multiplication signal obtained by changing the frequency of the reference clock into (1/A) thereof by the frequency demultiplier 60 is fed to the noninverting input terminal of the frequency comparator 81 of the PLL. Then the frequency comparator 81 outputs to the loop filter 82 a frequency comparison signal obtained by comparing the frequency of this frequency de-multiplication signal with that of another frequency de-multiplication signal supplied from the frequency demultiplier 85 (to be described later) to the inverting input terminal thereof. Thereafter, the loop filter 82 outputs to the VCO 83 a signal obtained by removing a high-frequency component of the frequency comparison signal supplied thereto. An oscillation output signal outputted from the VCO 83 is first bifurcated. The frequency of the oscillation output signal supplied to the frequency demultiplier 84 is changed to (1/M) thereof. Subsequently, a signal obtained as the result of this frequency de-multiplication is fed to the noninverting input terminal of the phase comparator 1 of the phase control means A. On the other hand, the other oscillation output signal is supplied to the frequency demultiplier 85. The frequency of the oscillation output signal applied to the frequency demultiplier 85 is changed to (1/a) thereof.

Further, by setting the frequency de-multiplication ratio (1/a) of the frequency demultiplier 85 as larger than that (1/M) of the frequency demultiplier 84, the frequency of the frequency comparison signal outputted from the frequency comparator 81 can be set as higher than that of the phase comparison signal outputted from the phase comparator 1.

Thus, in case of this drum servo system D, effects of an abrupt change of a state of a drum servo circuit (namely, the phase control means) A, which are equivalent to effects of a radical disturbance from the outside, can be absorbed in the PLL controlled by the VCO 83. Further, this can prevent a phase error occurring in the drum servo circuit from immediately reflecting change in the frequency of a frequency comparison signal. The drum servo circuit can stably follow change in the rotating phase of the drum 5 occurring due to change in reference clock.

Incidentally, in FIGS. 6, 7 and 8, the switches 50, 63 and 71 are illustrated as mechanical switching devices. An electronic switching device, however, may be used as each of the switches 50, 63 and 71.

Furthermore, in case of employing the above described structures, the following effects can be obtained.

First, in case of the structure changing a control signal similarly as the conventional system, the drum servo circuit (namely, the phase control means) A can stably follow a change of a control signal because a transient phase error does not occur in the drum servo circuit by changing a reference clock. Further, in case of the structure changing the frequency of a control signal, effects of a step response at the time of changing the frequency of a control signal are absorbed in the PLL for generating a control signal. Thus a radical change in input control signal does not occur. Consequently, the drum servo circuit (namely, the phase control means) A can stably follow a change in the frequency of a control signal. Moreover, in cases of the above described structures, a phase comparison between low-frequency signals used in a VTR is performed by using a frequency de-multiplication signal obtained by effecting a frequency de-multiplication of a reference clock signal which is produced as a result of a frequency de-multiplication of a high-frequency signal. Thus even if the frequency or phase of the reference clock signal is changed, the drum servo circuit can stably follow the change in the frequency or phase of the reference clock signal. Furthermore, the PLL or comparison control means for generating a control signal performs a phase comparison between signals having a frequency higher than the frequency of the control signal. Thus; in case of changing the frequency of the control signal, the circuit of the comparison control means can quickly respond to the change of the control signal. Thereby, the drum servo circuit (namely, the phase control means) A, to which the control signal is supplied, can stably follow the change of the control signal.

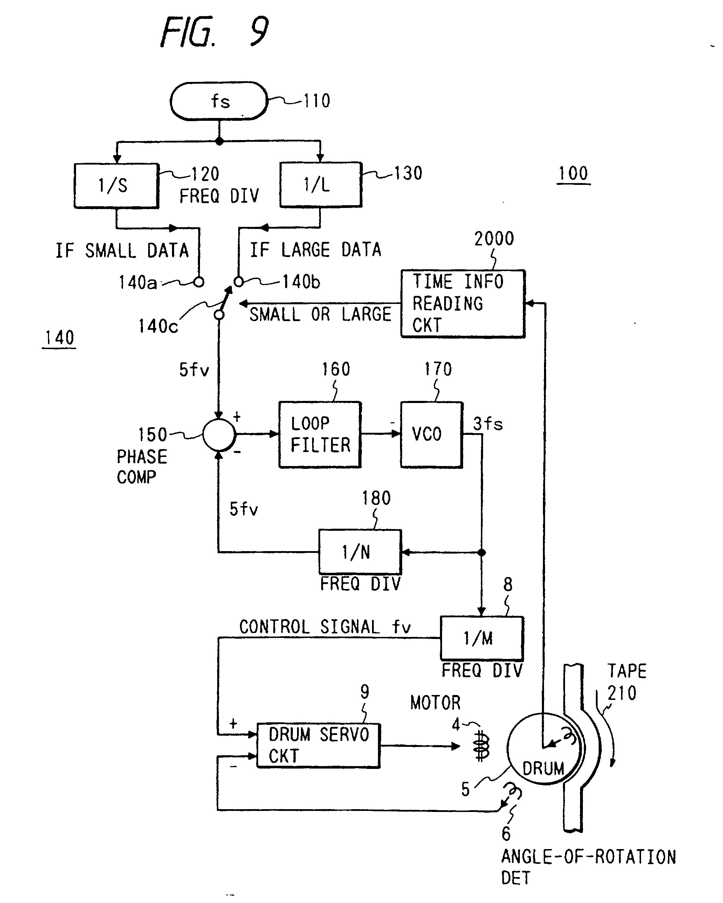

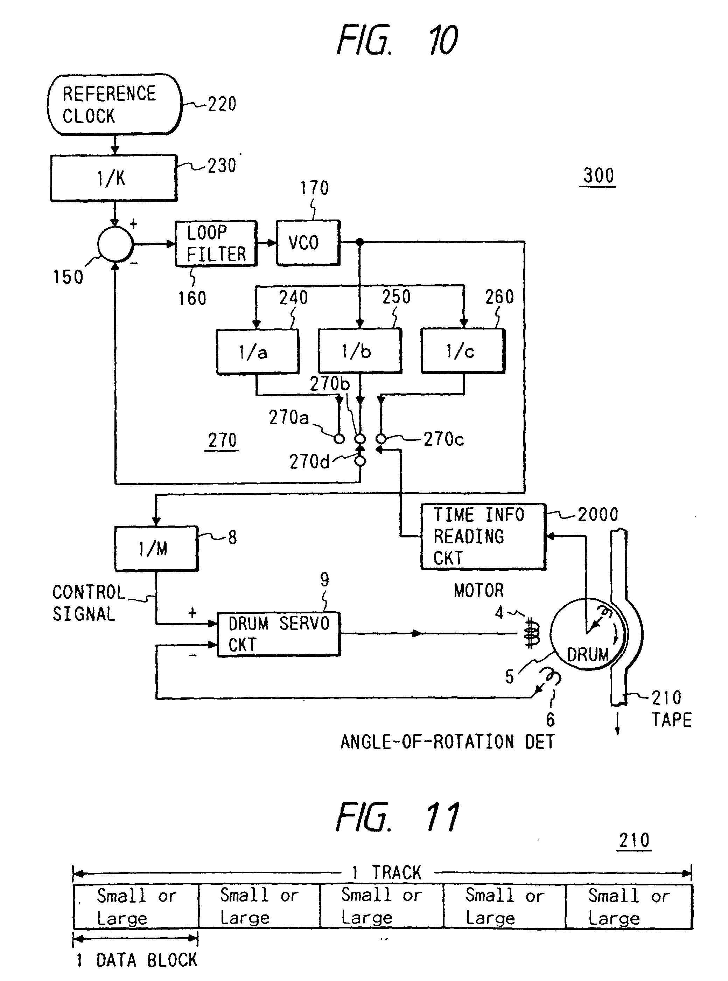

Hereinafter, preferred embodiments (namely, drum servo systems) of the present invention will be described by referring to FIGS. 9 and 10. Each of these drum servo systems is adapted to read time information relating to digital sound data represented by digital sound data signals, which are recorded onto, for example, video signal tracks on a magnetic tape in a superposing manner or on an independent signal track as will be described later, and to change the frequency of a control signal for controlling the number of rotations of a drum according to the time information by performing a phase comparison or a frequency comparison by using a signal having a frequency higher than the frequency. Thus, in each of these embodiments, a clock oscillation frequency of the control signal can be changed differently from the conventional drum servo system of FIG. 4 employing the reference clock generator 200.

Hereinafter, these embodiments in case of simultaneously recording a video signal and a digital sound data signal will be described in detail.

FIGS. 9 and 10 are schematic block diagrams respectively illustrating these embodiments (hereunder referred to as first and second embodiments, respectively). Further, FIG. 11 is a diagram for illustrating the time information recorded on a recording medium.

In FIGS. 9 and 10, like reference characters designate like composing elements of the above described drum servo systems. Therefore, the descriptions of such composing elements of the first and second embodiments are omitted herein. In FIGS. 9 and 10, reference numerals 100 and 300 denote drum servo systems; 110 an audio-sampling-frequency generator; 120, 130, 180, 230, 240, 250 and 260 frequency demultipliers respectively having frequency de-multiplication ratios (1/s), (1/L), (1/N), (1/K), (1/a), (1/b) and (1/c); 140 and 270 selection switches (hereunder referred to simply as switches); 140a, 140b, 270a, 270b and 270c stationary contacts; 140c and 270d movable contacts; 150 a phase comparator; 160 a loop filter; 170 a VCO; 2000 a time information reading circuit; 210 a magnetic tape; 220 a reference clock generator; fs an audio-sampling-frequency; and fv a video frequency.

First, the time information will be described in detail hereinbelow.

Generally, there is no synchronous relation between the video frequency fv of a video signal and the audio-sampling-frequency of a sound data signal. Hence, it is usual that these signals are simultaneously recorded by employing the following method.

Namely, each of tracks serially formed on the magnetic tape 210 for recording digital sound data signals is divided or partitioned in the longitudinal direction thereof into five data blocks as illustrated in FIG. 11. These data blocks are classified according to the number of audio-sampling-data to be packed and recorded in each of these data blocks into two groups as follows. One is a small-data block group of data blocks - each (hereunder referred to as Small Data) having a predetermined number S of audio-sampling-data. The other is a large-data block group of data blocks - each (hereunder referred to as Large Data) having a predetermined number L, which is larger than the predetermined number S, of audio-sampling-data. After the data blocks are preliminarily classified into these groups, audio-sampling data represented by digital sound data signals are recorded in the data blocks.

Incidentally, let X denote the average number of audio-sampling-data per data block in case where the video frequency fv is equal to a rated frequency. The numbers S and L are predetermined in such a manner to meet the following condition:

$$S < X < L.$$

The numbers of audio-sampling-data of Small Data and Large Data obtained by being sampled at the audio-frequency sampling frequency with what is called a crystal precision can be considered as precise information relating to time (namely, time information).

Thus precise time information can be recorded by recording on the magnetic tape 210 information representing which of Small Data and Large data is to be recorded.

Next, the first embodiment of the present invention will be described in detail hereinbelow.

As illustrated in FIG. 9, the drum servo system 100 is composed of a drum servo circuit (namely, a comparison control means) 9 for controlling a rotation of a drum 5 on the basis of a phase comparison signal obtained as a result of comparing the phase of an angle-of-rotation signal obtained according to an angle of rotation of the drum 5 with that of a control signal indicating a rotational frequency of the drum 5, the time information reading circuit (namely, a time information reading means) 120 for outputting a time-information reading signal obtained by reading time information recorded on the magnetic tape (namely, a recording medium) 121 to be scanned by way of the drum 5 and the phase comparator (namely, a comparison control means) 150 for selecting a plurality of frequency de-multiplication signals obtained as a result of a' frequency de-multiplication of a reference signal having an audio-sampling frequency fs, which is effected by using different frequency de-multiplication ratios (1/S) and (1/L), on the basis of at least the time information reading signal and for performing a control operation by effecting a phase comparison or a frequency comparison between signals having frequencies higher than the frequency of the control signal by use of the selected frequency de-multiplication signals.

An operation of the drum servo system 100 constructed as above described will be explained in detail hereinbelow.

First, in case where Large Data represent time information obtained from digital sound data signals recorded on the magnetic tape 210 by reproducing and scanning a track (or data blocks), on which the digital sound data signals are recorded, by means of the magnetic head loaded onto the drum 5, the time information reading circuit 2000 detects the Large Data and outputs to the switch 140 a time information reading signal indicating that the switch 140 should be placed in the position corresponding to the frequency demultiplier 130 (namely, the movable contact 140c should be connected to the stationary contact 140b). The switch 140 responds to the time information reading signal and is placed in the position corresponding to the frequency demultiplier 130.

This results in that a frequency de-multiplication signal obtained by changing the audio-sampling frequency fs of an audio-sampling signal generated in the audio-sampling frequency generator 110 into (1/L) thereof by use of the frequency demultiplier 130 is supplied to the noninverting input terminal of the phase comparator 150 of the PLL. The frequency of the frequency de-multiplication signal from the frequency demultiplier 130 is substantially equal to and slightly less than five times the frequency fv of a video signal. Further, the frequency de-multiplication ratio (1/L) of the frequency demultiplier 130 is less than that (1/S) of the frequency demultiplier 120.

Then, the phase comparator 150 outputs to the loop filter 160 a phase comparison signal obtained by comparing the frequency of this frequency de-multiplication signal with that of another frequency de-multiplication signal supplied from the frequency demultiplier 180 (to be described later) to the inverting input terminal thereof. Thereafter, the loop'filter 160 outputs to the VCO 170 a signal obtained by removing a high-frequency component of the frequency comparison signal supplied thereto. The frequency (3fs) of an oscillation output signal outputted from the VCO 170 is three times the audio-sampling frequency fs. PLL is composed of this phase comparator 150, the loop filter 160, the VCO 170 and the frequency demultiplier 180.

The oscillation output signal outputted from the VCO 170 is first bifurcated. The frequency of the oscillation output signal supplied to the frequency demultiplier 180 is changed to (1/N) thereof. Incidentally, N is a predetermined positive integer. Subsequently, a signal obtained as the result of this frequency de-multiplication is fed to the noninverting input terminal of the phase comparator 150. On the other hand, the other oscillation output signal is supplied to the frequency 'demultiplier 8. The frequency of the oscillation output signal applied to the frequency demultiplier 8 is changed to (1/M) 'thereof and as the consequence becomes equal to the video frequency fv. Thereafter, a signal obtained as the result of this frequency de-multiplication is fed to the noninverting input terminal of the phase comparator (not shown) of the drum servo circuit 9 as a control signal for controlling the drum servo circuit 9.

Further, by setting the frequency de-multiplication ratio (1/N) of the frequency demultiplier 180 as larger than that (1/M) of the frequency demultiplier 190, the frequency (5fv) of the frequency comparison signal outputted from the frequency comparator 150 can be set as higher than that (fv) of the phase comparison signal outputted from the phase comparator 1.

Next, in case where Small Data represent time information obtained by reproducing and scanning the track (or the data blocks) by means of the magnetic head loaded onto the drum 5, the time information reading circuit 2000 outputs to the switch 140 a time information reading signal indicating that the switch 140 should be placed in the position corresponding to the frequency demultiplier 120 (namely, the movable contact 140c should be connected to the stationary contact 140a). The switch 140 responds to the time information reading signal and is placed in the position corresponding to the frequency demultiplier 120.

This results in that a frequency de-multiplication signal obtained by changing the audio-sampling frequency fs of an audio-sampling signal generated in the audio-sampling frequency generator 110 into (1/S) thereof by use of the frequency demultiplier 120 is supplied to the noninverting input terminal of the phase comparator 150. The frequency of the frequency demultiplication signal from the frequency demultiplier 120 is substantially equal to and slightly larger than five times the frequency fv of a video signal. After this, the drum servo system operates similarly as in case where Large Data represent time information. Therefore, the description of the operation following this is omitted herein.

Thereafter, when the time information becomes represented by Large Data, the same operation as in the above described case where Large Data represent time information is performed.

Thus the drum servo system 100 of the first embodiment can change the frequency of the control signal for controlling the number of rotations of the drum by reading the time information recorded on the magnetic tape 210 and performing a phase comparison or a frequency comparison between signals having frequencies higher than the frequency of the control signal according to the time information.

Next, another drum servo system embodying the present invention (namely, the second embodiment of the present invention) will be described in detail hereinbelow.

As illustrated in FIG. 10, the drum servo system 300 is adapted to perform a frequency de-multiplication of a reference clock generated by the reference clock generator 220 by changing the frequency of the reference clock into (1/K) thereof and select one of frequency de-multiplication signals, which are obtained by changing the frequency of an output signal of the VCO 170 into (1/a), (1/b) and (1/c) thereof, respectively, according to time information, for the purpose of changing the rotational frequency of the drum.

As shown in FIG. 10, the drum servo system 300 is comprised of a drum servo circuit (namely, a rotation control means) 9 for controlling a rotation of the drum 5 on the basis of a phase comparison signal obtained as a result of comparing the phase of an angle-of-rotation detecting signal obtained according to an angle of rotation of the drum 5 with the phase of a control signal prescribing a rotating frequency of the drum 5, the time information reading circuit (namely, a time information reading means) 20 for reading time information recorded on the magnetic tape (namely, a recording medium) to be scanned by way of the drum 5 and the phase comparator (namely, a comparison control means) 150 for selecting one of frequency de-multiplication signals respectively obtained by performing frequency de-multiplications of an output signal (namely, a reference signal) of the VCO 170 by using different frequency de-multiplication ratios (1/a), (1/b) and (1/c) according to at least the time information and effecting a phase comparison or a frequency comparison of a signal having a frequency higher than a frequency of the control signal by use of the selected frequency de-multiplication signal. Namely, in case of the drum servo system 300, the frequency demultipliers 120 and 130 of the drum servo system 100 of FIG. 9 is replaced with the frequency demultiplier 230 employing a frequency de-multiplication ratio (1/K). Further, a frequency de-multiplication signal outputted from the frequency demultiplier 230 is directly applied to the noninverting input terminal of the phase comparator 150. Moreover, the frequency demultipliers 240,.250 and 260 which employ the frequency de-multiplication ratios (1/a), (1/b) and (1/c), respectively, is used instead of the frequency demultiplier 180. Furthermore, each of frequency de-multiplication signals outputted from the frequency demultipliers 240, 250 and 260 can be selected by using the switch 270 in response to the time information reading signal. In addition, the output signal selected by the switch 270 is directly supplied to the noninverting input terminal of the phase comparator 150. Incidentally, in FIG. 10, like reference characters designate like composing elements of the drum servo system of FIG. 9. Therefore, the descriptions of such composing elements of the second embodiment are omitted herein.

To change the frequency of a control signal for controlling the drum 5 in the drum servo system 300, the movable contact 270d of the switch 270 provided with the stationary contacts 270a, 270b and 270c, to which frequency de-multiplication signals obtained by changing the frequency of the output signals (namely, the reference signals) of the VCO 170 into (1/a), (1/b) and (1/c) thereof, respectively, on the basis of the frequency de-multiplication signal obtained by changing the frequency of a reference clock into (1/K) thereof by the frequency demultiplier 230 is connected to one of the stationary contacts 270a to 270c according to the time information signal outputted from the time information reading circuit 2000.

In the state of the switch 270 as shown in FIG. 10, a frequency de-multiplication signal outputted from the frequency demultiplier 250 is fed to the noninverting input terminal of the phase comparator 250.

Namely, a frequency de-multiplication signal obtained by changing the frequency of the reference clock into (1/K) thereof by the frequency demultiplier 230 is fed to the noninverting input terminal of the phase comparator 150. Then the phase comparator 150 outputs to the loop filter 160 a phase comparison signal obtained by comparing the phase of this frequency de-multiplication signal with that of another frequency de-multiplication signal supplied to the inverting input terminal thereof and selected by a switch 270 which will be described later. Thereafter, the loop filter 160 outputs to the VCO 170 a signal obtained by removing a high-frequency component of the phase comparison signal supplied thereto.

An oscillation output signal outputted from the VCO 170 is first bifurcated. The frequency of the oscillation output signal supplied to the frequency demultiplier 8 is changed into by (1/M) thereof. Subsequently, a signal obtained as the result of this frequency de-multiplication is fed to the noninverting input terminal of the phase comparator (not shown) of the drum servo circuit 9 as a control signal for controlling the drum servo circuit 9. On the other hand, the other oscillation output signal is further branched into three oscillation output signals (namely, branch signals) respectively supplied to the frequency demultipliers 240, 250 and 260. The frequency of the oscillation output signal applied to the frequency demultiplier 240 is changed to (1/a) thereof. Subsequently, a signal obtained as the result of this frequency de-multiplication is supplied to the stationary terminal or contact 270a of the switch 270. Similarly, the frequency of the oscillation output signal applied to the frequency demultiplier 250 is changed to (1/b) thereof. Subsequently, a signal obtained as the result of this frequency de-multiplication is supplied to the stationary terminal or contact 270b of the switch 270. Further, the frequency of the oscillation output signal applied to the frequency demultiplier 260 is changed to (1/c) thereof. Subsequently, a signal obtained as the result of this frequency de-multiplication is supplied to the stationary terminal or contact 270c of the switch 270.

By setting each of the frequency de-multiplication ratios (1/a), (1/b) and (l/c) as larger than that (1/M), the frequency of the phase comparison signal outputted from the phase comparator 150 can be set as higher than that of the phase comparison signal outputted from the phase comparator 1.

Thus, in cases of the drum servo systems 100 and 300, effects of an abrupt change of a state of a drum servo circuit of the phase control means A, which are equivalent to effects of a radical disturbance from the outside, can be absorbed in the PLL comprised of the phase comparator 150, the loop filter 160, the VCO 170 and the frequency demultipliers 180, 240, 250 and 260 by changing the combination of switching states of the switches 140 and 270. These drum servo circuit can stably follow change in the rotating phase of the drum 5 occurring due to change in reference clock.

Further, when a phase comparison is performed in the phase comparator 150, a low-frequency signal obtained by effecting a frequency de-multiplication of a signal having the audio-sampling frequency fs or of a reference clock is supplied to the noninverting input terminal of the phase comparator 150, and on the other hand another low-frequency signal obtained by effecting a frequency de-multiplication of an oscillation output signal of the VCO 170 having a frequency (3fs), which is three times the audio-sampling frequency fs, is supplied to the inverting input terminal of the VCO 170. As the result, the phase comparison can be effected in a low-frequency region. Thus, even when the signal to be supplied to the noninverting input terminal of the phase comparator is selected from such low-frequency signals by the switches 140 and 270, the phase comparison can stably be performed without an abrupt phase variation or frequency variation.

Further, the PLL for generating a control signal uses the frequency (namely, the audio-sampling frequency fs) higher than the frequency of the control signal (namely, the video frequency fv). Therefore, in case of effecting a frequency control by changing the value of the frequency of the control signal, the drum servo system can quickly respond to the change in the frequency of the control signal.

Furthermore, when recording and reproducing, a drum servo operation is effected on the basis of a reference clock or a signal having the audio-sampling frequency fs with oscillation precision of a quartz-crystal oscillator. Thus a reproducing time is substantially equal to a recording time. Additionally, a sound signal recorded simultaneously with a video signal can be reproduced substantially simultaneously with the video signal.

## Claims

1. A control system for a rotatable drum (5) with a reproducing head (6) for scanning a recording medium (210), the recording medium storing a sequence of samples of a digital audio signal and a video signal asynchronous with the digital audio signal, the samples relating to a common fixed sampling frequency, the sequence of the samples being separated into blocks including at least first-type blocks and second-type blocks, the first-type blocks each having a first predetermined number of samples therein, the second-type blocks each having a second predetermined number of samples therein, the second predetermined number differing from the first predetermined number, the control system comprising:

first means (2000) for detecting whether a block currently scanned by the reproducing head is a first-type block or a second-type block, and generating a detection signal representative thereof;
second means (8) for generating a control signal having a controllable frequency;
third means (140, 270) for controlling the frequency of the control signal in response to the detection signal; and
fourth means (9) for controlling rotation of the drum in response to the control signal.

2. A control system as recited in claim 1, wherein the fourth means comprises:

phase sensing means (6, 7, 9) for sensing a phase of the rotation of the drum and generating a drum phase signal representative thereof;
comparing means (1) for comparing a phase of the control signal and a phase of the drum phase signal to generate a drive signal in response to the control signal and the drum phase signal; and
rotation control means (4) for controlling the rotation of the drum in response to the drive signal.

3. A control system as recited in claim 1 or 2, wherein the recording medium (210) also stores time information identifying a number of samples stored in the block currently scanned and indicative of whether the block currently scanned is said first-type block or said second-type block, and wherein said first means (2000) detects said time information and generates said detection signal in accordance therewith.

4. An apparatus comprising:

a rotatable drum (5);
a reproducing head (6) mounted on the rotatable drum (5);
a recording medium (210) scanned by the reproducing head, and
a control system as recited in any one of claims 1 to 3.

**Patentansprüche**

1. Steuersystem für eine Drehtrommel (5) mit einem Wiedergabekopf (6) zum Abtasten eines Aufzeichnungsmediums (210), das eine Sequenz von Abtastwerten eines digitalen Audiosignals und eines Videosignals asynchron mit dem digitalen Audiosignal speichert, wobei die Abtastwerte sich auf eine gemeinsame feste Abtastfrequenz beziehen und die Sequenz der Abtastwerte in Blöcke separiert sind, die wenigstens Blöcke erster Art und Blöcke zweiter Art enthalten, wobei die Blöcke erster Art jeweils eine erste vorbestimmte Anzahl von Abtastwerten haben und die zweiten Blöcke jeweils eine zweite vorbestimmte Anzahl von Abtastwerten haben, wobei die zweite vorbestimmte Anzahl sich von der ersten vorbestimmten Anzahl unterscheidet, mit:

einem ersten Mittel (2000) zum Feststellen, ob ein vom Wiedergabekopf aktuell abgetasteter Block ein Block erster Art oder ein Block zweiter Art ist, und zum Erzeugen eines dies repräsentierenden Feststellsignals;
einem zweiten Mittel (8) zum Erzeugen eines Steuersignals mit einer steuerbaren Frequenz;
einem dritten Mittel (140, 270) zum Steuern der Frequenz des Steuersignals als Reaktion auf das Feststellsignal; und mit
einem vierten Mittel (9) zum Steuern der Drehung der Trommel als Reaktion auf das Steuersignal.

2. Steuersystem nach Anspruch 1, dessen viertes Mittel ausgestattet ist mit

einem Phasenmeßmittel (6, 7, 9) zum Messen der Phase der Drehung der Trommel und zum Erzeugen eines Trommelphasensignals;
einem Vergleichsmittel (1) zum Vergleichen einer Phase des Steuersignals mit einer Phase des Trommelphasensignals zum Erzeugen eines Ansteuersignals als Reaktion auf das Steuersignal und auf das Trommelphasensignal; und mit
einem Drehsteuermittel (4) zum Steuern der Drehung der Trommel als Reaktion auf das Ansteuersignal.

3. Steuersystem nach Anspruch 1 oder 2, bei dem das Aufzeichnungsmedium (210) auch Zeitinformationen speichert, die eine Anzahl von Abtastwerten identifizieren, die im aktuell abgetasteten Block gespeichert sind und anzeigen, ob der aktuell abgetastete Block der Block erster Art oder der Block zweiter Art ist, und wobei das erste Abtastmittel (2000) die Zeitinformation feststellt und das Feststellsignal gemäß dieser Zeitinformation erzeugt.

4. Gerät, mit:

einer Drehtrommel (5);
einem auf der Drehtrommel (5) befestigten Wiedergabekopf (6);
einem vom Wiedergabekopf abtasteten Aufzeichnungsmedium (10); und mit
einem Steuersystem nach einem der Ansprüche 1 bis 3.

**Revendications**

1. Système de commande pour un tambour (5) rotatif, comprenant une tête de reproduction (6) pour balayer un support d'enregistrement (210), ledit support d'enregistrement stockant une séquence d'échantillons d'un signal audio numérique et d'un signal vidéo, asynchrone par rapport au signal audio numérique, les échantillons correspondant à une fréquence d'échantillonnage fixe commune, la séquence des échantillons étant séparée en blocs englobant au moins des blocs d'un premier type et des blocs d'un deuxième type, les blocs du premier type comportant chacun un premier nombre prédéterminé d'échantillons, les blocs du deuxième type comportant chacun un deuxième nombre prédéterminé d'échantillons, le deuxième nombre prédéterminé étant différent du premier nombre prédéterminé, ledit système de commande comprenant:

un premier moyen (2000) pour détecter si un bloc en cours de balayage par la tête de reproduction est un bloc du premier type ou un bloc du deuxième type, et pour générer un signal de détection représentatif du type de bloc;

un deuxième moyen (8) pour générer un signal de commande ayant une fréquence commandable;

un troisième moyen (140, 270) pour commander la fréquence du signal de commande, en réponse au signal de détection; et

un quatrième moyen (9) pour commander la rotation du tambour, en réponse au signal de commande.

2. Système de commande selon la revendication 1, **caractérisé en ce que** le quatrième moyen comprend:

un moyen de détection de phase (6, 7, 9) pour détecter une phase de la rotation du tambour et générer un signal de phase de tambour représentatif de cette phase;

un moyen de comparaison (1) pour comparer une phase du signal de commande et une phase du signal de phase de tambour aux fins de produire un signal d'excitation en réponse au signal de commande et au signal de phase de tambour; et

un moyen de commande de rotation (4) pour commander la rotation du tambour en réponse au signal d'excitation.

3. Système de commande selon la revendication 1 ou 2, **caractérisé en ce que** le support d'enregistrement (210) stocke également des informations de temps identifiant un certain nombre d'échantillons mémorisés dans le bloc en cours de balayage et indiquant si le bloc en cours de balayage est un bloc dudit premier type ou un bloc dudit deuxième type, et **en ce que** ledit premier moyen (2000) détecte lesdites informations de temps et produit ledit signal de détection, en accord avec ces informations.

4. Appareil comprenant un tambour (5) rotatif, une tête de reproduction (6) montée sur le tambour (5) rotatif, un support d'enregistrement (210) balayé par la tête de reproduction, et un système de commande selon l'une quelconque des revendications 1 à 3.

# FIG. 1
# PRIOR ART

CONTROL SIGNAL

100

A

MOTOR

PHASE COMP — 1

LOOP FILTER — 2

AMP — 3

4

DRUM — 5

WAVEFORM SHAPING DEV — 7

6

ANGLE-OF-ROTATION DET

# FIG. 2
# PRIOR ART

REFERENCE CLOCK

FREQ DIV — 8

100

A

MOTOR

PHASE COMP — 1

LOOP FILTER — 2

AMP — 3

4

DRUM — 5

WAVEFORM SHAPING DEV — 7

6

ANGLE-OF-ROTATION DET

# FIG. 3
## PRIOR ART

VERTICAL
SYNC
SIGNAL

22

100

14

| FREQ COMP | FILTER | VCO |
| 36 | 38 | 40 |

FREQ DIV — 42

16

| PROG FREQ DIV | FREQ COMP | FILTER | VCO |
| 43 | 44 | 46 | 48 |

PROG FREQ DIV — 50

21

20

18

| FREQ COMP | LOOP COMPEN CKT | POL INV CKT | | MDA |
| 24 | 28 | 30 | 32 | 34 |

TO DRUM

MOTOR

12

TACH

26

10

EP 0 720 165 B1

14

## FIG. 4
## PRIOR ART

REFERENCE CLOCK ~200

100

FREQ DIV ~8

CONTROL SIGNAL fv

MOTOR
4

DRUM SERVO CKT ~9

5

DRUM

6 ~ m

ANGLE-OF-ROTATION DET

DRUM ROTATION INFORMATION SIGNAL

## FIG. 5
## PRIOR ART

REFERENCE CLOCK ~200

100

FREQ DIV ~8

CONTROL SIGNAL fv 9

MOTOR
4

2

3

1

+

LOOP FILTER

AMP

DRUM

5

−

6
ANGLE-OF-ROTATION DET

WAVEFORM SHAPING DEV

7

DURM ROTATION INFORMATION SIGNAL

## FIG. 6

REFERENCE
CLOCK a

50c

50

50a

REFERENCE
CLOCK b

50b

51

FREQ DIV $\left(\frac{1}{A}\right)$

53

LOOP
FILTER

54

VCO

52

56

FREQ DIV $\left(\frac{1}{a}\right)$

FREQ DIV $\left(\frac{1}{M}\right)$

55

A

MOTOR
4

5

B

1

PHASE
COMP

2

LOOP
FILTER

3

AMP

DRUM

7

WAVEFORM
SHAPING DEV

6

ANGLE-OF-ROTATION
DET

EP 0 720 165 B1

FIG. 7

# FIG. 8

REFERENCE CLOCK

FREQ DIV $\left(\dfrac{1}{A}\right)$ ~80

81
+ FREQ
− COMP

82
LOOP FILTER

83
VCO

85
FREQ DIV $\left(\dfrac{1}{a}\right)$

84
FREQ DIV $\left(\dfrac{1}{M}\right)$

A

D

1
PHASE COMP
+
−

2
LOOP FILTER

3
AMP

MOTOR
4

5
DRUM

6
ANGLE-OF-ROTATION DET

7~ WAVEFORM SHAPING DEV

EP 0 720 165 B1

## FIG. 9

## FIG. 10

REFERENCE CLOCK ~220

1/K ~230

300

170

150 +−

LOOP FILTER

VCO

160

240

250

260

1/a

1/b

1/c

270b

270a

270

270d

270c

1/M ~8

CONTROL SIGNAL

TIME INFO READING CKT ~2000

MOTOR

9

DRUM SERVO CKT

4

DRUM

5

6

210 TAPE

ANGLE-OF-ROTATION DET

## FIG. 11

210

— 1 TRACK —

| Small or Large | Small or Large | Small or Large | Small or Large | Small or Large |
|---|---|---|---|---|

1 DATA BLOCK